# EUROPÄISCHE PATENTANMELDUNG

(11) **EP 3 028 559 A1**
(43) Veröffentlichungstag der Anmeldung: **08.06.2016**
(21) Anmeldenummer: 15197666.9
(22) Anmeldetag: 02.12.2015
(51) Int. Cl.: A01D 89/00

(54) **AUFNAHMEVORRICHTUNG AN EINER ERNTEMASCHINE**

(30) Priorität: 03.12.2014 DE 102014117739
(71) Anmelder: B. Strautmann & Söhne GmbH u. Co. KG, 49196 Bad Laer (DE)
(72) Erfinder: STRAUTMANN, Wolfgang, 49196 Bad Laer (DE); KLEINE NIESSE, Richard, 49536 Lienen (DE)
(74) Vertreter: Träger, Denis

(57) **Zusammenfassung**

Die Erfindung betrifft eine Aufnahmevorrichtung (1) an einer Landmaschinen, wie Erntemaschine für Halm- und Blattgut oder Heuwerbemaschine, umfassend eine Trommel (2) mit darauf angebrachten Förderzinken (8, 8', 8", 8"', 8"") aus einem elastischen Material. Bei bekannten Aufnahmevorrichtungen sind die Förderzinken nur umständlich demontierbar und/oder erschweren in ihrem Befestigungsbereich die Übergabe des Ernteguts an nachgeordnete Aggregate.

Die Erfindung schlägt eine Aufnahmevorrichtung vor, bei der die Förderzinken (8, 8', 8", 8"', 8"") mit Sockeln (9) versehen und mittels spezieller Befestigungselemente in die Aufnahmetrommel integriert sind. Im Ergebnis bilden die Oberflächen der Sockel (9) und der Oberfläche der Trommel (2) gemeinsam eine widerstandsarme Kontur aus, aus der nur die Einzelzinken (10) hervorragen.

Die Erfindung betrifft weiterhin einen Förderzinken (8, 8', 8", 8"', 8"") für eine Landmaschine. Bekannte Förderzinken sind überwiegend aus Federdraht als Doppel-Förderzinken hergestellt. Nachteilig an diesen Doppel-Förderzinken ist, dass ihr Windungsbereich stets in einem geschützten Bereich montiert sein muss, da sich andernfalls das Erntegut im Windungsbereich der Doppel-Förderzinken verfangen kann und so Störungen verursacht. Zur Beseitigung dieser Nachteile wird ein aus einem elastischen Material bestehender Förderzinken (8, 8', 8", 8"', 8"") mit wenigstens zwei Einzelzinken (10) vorgeschlagen, bei dem der Befestigungsbereich (11) zwischen den Einzelzinken (10) im Sockel (9) eine Befestigungsbohrung (13) mit einer Absenkung (14) zur Aufnahme eines Schraubenkopfes umfasst.

## Beschreibung

Die Erfindung betrifft eine Aufnahmevorrichtung an einer Erntemaschine und einen aus einem elastischen Material hergestellten Förderzinken für eine Aufnahmevorrichtung an einer Landmaschine, wie Erntemaschine für Halm- und Blattgut oder Heuwerbemaschine. Bei der Erntemaschine kann es sich z.B. um einen Ladewagen, eine Ballenpresse oder einen Feldhäcksler handeln, bei den Heuwerbemaschinen kommen beispielsweise Schwadleger (Merger) in Betracht.

Aus US 4189907 A ist eine Aufnahmevorrichtung mit einer Trommel und daran angebrachten Förderzinken bekannt. Bei den Förderzinken handelt es sich um Einzelzinken. Die Einzelzinken sind in Aufnahmen (reatainer 20) befestigt, die den Trommelmantel umgeben und diesen nach außen hin überragen. Nachteilig an dieser Aufnahmevorrichtung ist, dass die die Trommel überragenden Aufnahmen Angriffspunkte für Materialablagerungen bilden. Ob und wie die Einzelzinken demontierbar sind ist nicht offenbart.

Weiterhin ist aus DE 19740589 A1 eine Aufnahmevorrichtung mit einer Trommel und einem kammartigen Abstreifer bekannt. Die Trommel wird gebildet aus offenen U-Profilen, welche durch Mantelbleche miteinander verbunden sind. Die Aufnahmezinken sind als Doppelschenkelfedern ausgebildet und aus einem Federstahl hergestellt. Der spiralförmige Windungsbereich ist in den U-Profilen aufgenommen, so dass nur die Schenkel (Abschnitte 32) den Trommelrand überragen.

Bei der Erntegutaufnahme gelangt in die offenen U-Schienen Halmgut, welches von den kammartigen Abstreifern nicht sauber abgestreift werden kann, sondern von diesen in die oben offene U-Schiene gedrückt wird und sich im Anschluss daran vor den Abstreifern stauen kann. Dies kann zu Stopf- und Wickelerscheinungen und Schäden an den Bauteilen führen.

DE 202011002316 U1 zeigt einen Gutaufnehmer mit Zinken 14, die an Zinkenträgern 24 befestigt sind. Die Zinkenträger bilden gemeinsam mit einer zentralen Antriebswelle eine Trommel aus.

Die Zinken 14 weisen einen geraden Teil 14a und einen spiralförmigen Teil 14b auf. Der Federdraht ist im mittleren Bereich in Form einer Windungsspirale ausgeführt, aus welcher die Enden des Federdrahtes linear hervortreten und so die Zinkenschenkel ausbilden. Konstruktionsbedingt hängt die Funktionsweise dieser Zinken vom Zusammenwirken der Federwirkung des spiralförmigen Teils mit der Federwirkung des geraden Teils, also der Zinkenschenkel, ab. Würden solche Doppel-Förderzinken aus einem anderen Material hergestellt, sind diese denen aus Federstahl bezüglich der Federungseigenschaften und Lebensdauer deutlich unterlegen. Nachteilig an diesen Doppel-Förderzinken ist, dass der Windungsbereich der Doppel-Förderzinken stets in einem vom Erntegut nicht beaufschlagten Bereich montiert sein muss, da sich andernfalls das Erntegut im Windungsbereich der Doppel-Förderzinken verfangen kann und so Stauungen und Beschädigungen auftreten würden.

Derartige Doppel-Förderzinken werden in der Regel rundum mit Abstreifern abgedeckt. Zwischen den Abstreifern befinden sich Spalten, die die Schenkel der Doppel-Förderzinken hervortreten lassen. Diese Abstreifer haben den Nachteil teuer zu sein und erschweren darüber hinaus den Zugang zu den Doppel-Förderzinken, so dass ein Austausch von Förderzinken bei Reparaturen und Wartungsarbeiten einen erheblichen Aufwand erfordert.

Die bekannten Einzel- und Doppel-Förderzinken haben im Einsatz die Eigenschaft, nach dem Ausweichen der Schenkel unter Belastung oder bei Bodenberührung teils schlagartig zurückzuschnellen. Hierdurch werden Lastspitzen verursacht, die zu Schäden im Befestigungsbereich oder an den Zinken selbst führen können. Weiterhin verringern die durch die schlagartige Entlastung bewirkten Vibrationen die Lebensdauer der Förderzinken.

Darüber hinaus zeigen die bekannten Doppel-Förderzinken aus Federdraht bei Bodenberührung ein relativ aggressives Verhalten und können beispielsweise eine unter dem aufzunehmenden Erntegut befindliche Grasnarbe durch Aufreißen beschädigen.

Weiterhin ist nachteilig, dass die Federkraft im Wesentlichen in der Spirale gespeichert wird und nicht im eigentlichen Zinken. Gegenüber der Spirale ist der Schenkel des Zinkens - je nach Qualität des verwendeten Materials - eher weniger biegsam, so das bei Auftreffen des Schenkels oder der Spitze des Schenkels auf einen auf dem Boden liegenden Fremdkörper (z.B. einen Stein) die Spirale des Doppel-Förderzinkens gespannt wird. Der eigentliche Schenkel des Doppel-Förderzinkens bleibt dagegen eher in einem geraden Zustand. Wenn jetzt die Spirale so stark gespannt ist, dass die gespeicherte Kraft größer ist als die zum Bewegen des Gegenstandes notwenige Kraft, schnellt der Zinken nach vorne und bewegt den Gegenstand, der bisher blockiert hat, ruckartig. So können beispielsweise Steine oder sonstige Fremdkörper aus dem Boden gerissen und in die Umgebung oder den Futterschwad katapultiert werden. Diese Steine können beim Auftreffen direkte Beschädigungen, beispielsweise an einem ziehenden Traktor, bewirken. Darüber hinaus können sie in den Schwad bzw. den Strom des aufzunehmenden Ernteguts geschleudert werden und sich dort verfangen. Die Fremdkörper gelangen dann zu den nachgelagerten Arbeitswerkzeugen der Erntemaschine und können diese beschädigen und/oder bleiben im Futter bzw. Fördergut und können so die Gesundheit von Tieren gefährden, die das Futter zu einem späteren Zeitpunkt fressen sollen.

Eine aus DE 10021748 A1 bekannte Gutaufnahmeeinrichtung zeigt eine Aufnahmevorrichtung, bei welcher die Förderzinken aus einzelnen Fingern bestehen, die in mehreren linear am Umfang versetzten Reihen aus der Trommel hervortreten. Die Abstreifarbeit des Ernteguts von den Fingern wird von einem rotierenden Zwischenförderer ausgeführt. Die Förderzinken können aus Gummi oder einem anderen federnden Material bestehen und somit eine bodenschonende Eigenschaft aufweisen. Sie weisen jedoch eine schlechtere Fördereigenschaft als die bekannten Doppel-Förderzinken aus Stahldraht auf. Außerdem kann sich Erntegut im Bereich der Zinkenfüße bzw. des Trommelmantels ansammeln, da der dargestellte Zwischenförderer lediglich im Außenbereich der Förderzinken eine kammartige Wirkung hat und seine Förderelemente nicht an den Trommelmantel heranreichen. Darüber hinaus sind die Finger als nicht austauschbar dargestellt.

Die vorliegende Erfindung hat sich die Aufgabe gestellt, eine Aufnahmevorrichtung für Landmaschinen vorzuschlagen, die unempfindlich gegenüber Verschmutzungen ist und das Erntegut widerstandsarm weiterleitet. Weiterhin ist es Aufgabe der Erfindung, einen einfachen und austauschbaren Förderzinken zu schaffen, dessen definierte Materialqualität optimale Federungseigenschaften aufweist und dessen Formgebung eine einfache Montage, bzw. Demontage zulässt. Darüber hinaus soll der Zinken so beschaffen sein, dass er bei Auftreffen auf einen ihn blockierenden Gegenstand partiell ausweichen kann, insbesondere soll die durch den Gegenstand auf den Zinken wirkende Kraft sich nicht so ruckartig entladen, dass dieser Gegenstand nach vorne in das zu fördernde Halm- und Blattgut geschossen wird und sich darin verfängt. Der Zinken soll aus einem Material und in einer Form geschaffen werden, der ein partielles Ausweichen des Zinkens möglich macht, so dass Fremdkörper nicht mehr so einfach aufgenommen werden können.

Die erfindungsgemäße Aufgabe wird gelöst durch eine Aufnahmevorrichtung nach dem Oberbegriff des Anspruches 1, bei der:
- die Förderzinken einen Sockel und wenigstens zwei aus dem Sockel hervortretenden Einzelzinken umfassen,
- der Sockel einen Befestigungsbereich umfasst, welcher zwischen den Einzelzinken angeordnet ist,
- die Trommel Taschen zur Aufnahme der Förderzinken aufweist,
- die Sockel der Förderzinken eine Oberfläche aufweisen und
- die Oberfläche der Trommel gemeinsam mit den Oberflächen der Sockel eine das Erntegut widerstandsarm leitende Kontur ausbildet.

Für die erfindungsgemäße Aufnahmevorrichtung ist es wesentlich, dass die Trommel einerseits eine geschlossene Mantelkontur ausbildet, in welche die Aufnahmezinken integriert sind und andererseits die Befestigungselemente der Förderzinken gut zugängliche sind. Dies wird erreicht durch das Angleichen der Oberflächenkontur des Zinkensockels an die Oberflächenkontur des Trommelmantels sowie die von außen, dass heißt: nicht durch das Innere der Trommel, zugängliche Befestigung der Förderzinken. Zur Befestigung der Zinken sind im Trommelmantel Aufnahmetaschen vorgesehen, in welchen die Sockel der Zinken vorzugsweise formschlüssig aufgenommen sind. Zwischen den Einzelzinken ist im Sockel ein Befestigungsbereich vorgesehen, der eine Befestigungsbohrung mit einer Absenkung zur Aufnahme eines Schraubenkopfes umfasst. Die Befestigungsschraube incl. Schraubenkopf befindet sich somit vollständig in einem geschützten Bereich, wodurch ebenfalls die Gefahr unerwünschter Erntegutansammlungen und hieraus resultierender Störungen verringert wird. Im Ergebnis überragen bei der erfindungsgemäßen Aufnahmevorrichtung somit lediglich die radial nach außen weisenden Förderzinken die Oberfläche des Trommelmantels.

Die nach außen weisende Oberfläche eines Aufnahmezinken-Sockels kann planeben sein. Bevorzugt wird jedoch eine Ausführungsform, bei der die Oberfläche der Sockel einen Radius aufweist, der an den Außenradius der Trommel angeglichen ist. Die Trommeloberfläche geht somit ansatzlos in die Sockeloberfläche über und bietet keine Angriffspunkte, an denen sich zu förderndes Erntegut festsetzen könnte.

Um für Trommeln mit unterschiedlich tiefen Aufnahmetaschen einheitliche Aufnahmezinken verwenden zu können, können Ausgleichsring zum Ausgleich etwaiger Höhendifferenzen vorgesehen sein. Soweit solche Höhendifferenzen ausgeglichen werden sollen, werden die Ausgleichsringe zwischen den Sockel der Aufnahmezinken und den Boden der Aufnahmetaschen montiert.

Die erfindungsgemäße Aufgabe wird weiterhin gelöst durch einen Förderzinken nach dem Oberbegriff des Anspruch 6, bei dem der Befestigungsbereich zwischen den Einzelzinken im Sockel eine Befestigungsbohrung mit einer Absenkung zur Aufnahme eines Schraubenkops umfasst.

Beim erfindungsgemäßen Förderzinken sind der Sockel und die daraus hervortretenden Einzelzinken entweder aus Einzelteilen zusammengesetzt oder einstückig aus einem Kunststoffmaterial ausgebildet. Wesentlich ist, dass zumindest die Einzelzinken aus einem elastischen Material hergestellt sind. Sie können, ebenso wie der Sockel, eine geschlossene Form aufweisen. Der Sockel ist entweder ebenfalls aus einem elastischen Material hergestellt, kann aber auch aus einem nicht elastischen Material hergestellt sein.

Die für den Arbeitseinsatz, nämlich das Aufsammeln von Erntegut vom Boden, erforderliche Federarbeit, wird im Wesentlichen von den aus dem Sockel hervortretenden Einzelzinken übernommen. Die Förderzinken sind somit so gestaltet, dass eine durch das Erntegut ausgeübte Kraft F1, die auf die Förderzinken wirkt, im Förderzinken selbst eine Rückstellkraft F2 erzeugt. Bei nachlassender Kraft F1 federn die Einzelzinken bedingt durch die Rückstellkraft F2 in ihre Ausgangsposition zurück. Der Sockel des Einzelzinkens nimmt, im Gegensatz zum Sockel eines als Stand der Technik bekannten Doppel-Förderzinkens mit Spiralfeder-Sockel nicht bzw. nur unwesentlich am Federprozess teil. Die wesentliche Federarbeit wird somit durch die Förderzinken geleistet.

Soweit der Sockel aus Kunststoff, beispielsweise Polyurethan, hergestellt ist, federt er gleichwohl etwas, jedoch wesentlich weniger als die als Stand der Technik bekannten Spiralfedern, bei denen die Spirale den Sockel darstellt und dieser Spiral-Sockel explizit für die Federung vorgesehen ist. Der erfindungsgemäße Sockel kann dagegen weitgehend starr und in Form eines vorzugsweise geschlossenen Körpers ausgeführt werden. Dies hat den Vorteil, dass der geschlossene Körper wenig Angriffsflächen aufweist, an denen sich Erntegut festsetzen könnte. Vorzugsweise ist der Sockel strömungstechnisch günstig ausgeformt und in seinen Eck- und Kantenbereichen abgerundet.

Die erfindungsgemäßen Förderzinken sind universell an verschiedenen Ausführungsformen von Aufnahmevorrichtungen, im Folgenden auch Pick-ups genannt einsetzbar. Solche Pick-ups können gesteuert oder ungesteuert sein. Sie können eine aus mehreren Zinkenträgerrohren gebildete Trommel aufweisen oder eine rohrartige Trommel, auf die die Förderzinken direkt montiert sind.

Von besonderem Vorteil ist es, wenn in die Befestigungsbohrung eine starre Buchse eingesetzt ist. Insbesondere kann diese starre Buchse aus Metall bestehen. Die Buchse gewährleistet, dass die Befestigungsschraube nur soweit angezogen werden kann, bis die Auflagefläche des Schraubenkopfes die Oberfläche der Buchse kontaktiert.

Dabei ist es günstig, wenn die Ansenkung der für die Befestigung vorgesehenen Bohrung eine Auflage ausbildet, welche im nicht montierten Zustand die starren Buchse um ein Maß (x) überragt. Bei der Montage wird somit zunächst der den Schraubenkopf kontaktierende Kunststoff soweit komprimiert, bis der ganze Förderzinken fest an der Aufnahmetrommel anliegt. Durch Wahl eines geeigneten Maßes (x) wird der Zinken mit einer vordefinierten Vorspannung befestigt.

Besonders günstig ist der Einsatz der erfindungsgemäßen Förderzinken an Pick-ups mit in den Trommelmantel integriertem Zinkenhaltern. Der geschlossene Sockel ermöglicht es, Zinkenhalterform und Sockelform aufeinander abzustimmen, so dass je ein Förderzinken mit seinem Sockel in je einen Zinkenhalter formschlüssig einsetzbar ist.

Weiterhin ist die vorgeschlagene Zinken-Konstruktion besonders vorteilhaft bei Aufnahmetrommeln, bei denen die Zinken an einer Trommel feststehend montiert und die Trommel nicht vollständig von Leiblechen umgriffen wird, durch die hindurch die Zinkenspitzen ragen. Denn bei einer Aufsammeltrommel, bei der die Trommel mit auf Zinkenträgern befestigten Förderzinken nicht vollständig von Leitblechen umgriffen werden, müssen, wenn nicht aktiv wirkende Instrumente zum Abheben des von der Aufnahmetrommel aufgesammelten Materials verwendet werden (wie diese z.B. in US 4189907 oder auch DE 10021748 A1 vorgeschlagen werden), ebenfalls Abstreifer zum Einsatz kommen. Diese wirken dann allerdings nur in einem bestimmten Bereich der Aufnahmetrommel. Dieser Bereich ist dort angesiedelt, wo das geförderte Material an nachfolgende Förderorgane weitergegeben werden soll.

Bei dem verwendeten elastischen Material zur Herstellung der Förderzinken handelt es sich vorzugsweise um Polyurethan. Nicht ausgeschlossen ist jedoch der Einsatz anderer Kunststoffe oder auch Kunststofflegierungen.

Weiterhin ist es von Vorteil, wenn der Sockel an der Seite, aus der die Einzelzinken hervortreten, eine gewölbte Oberfläche aufweist, so dass eine Anpassung der Oberflächenkontur an die Oberflächenkontur der Pick-up erfolgen kann. Insbesondere ist es günstig, wenn der Radius des Förderzinken-Sockels mit dem Radius der Trommel der Pick-up übereinstimmt, so dass der Förderzinken so in die Trommel einsetzbar ist, dass die beiden Radien übergangslos ineinander übergehen. Hierdurch wird die gleichmäßige Aufnahme von Erntegut begünstigt und der Kraftbedarf, sowie die Gefahr unerwünschter Materialsammlungen im Bereich des Sockels, reduziert.

Weiterhin wird hierdurch das durch passive Elemente, wie der Abstreifer, erfolgende Ablösen des Materials von den Förderzinken begünstigt. Durch diesen Radius wird sichergestellt, dass der Abstreifer, der das Fördergut untergreifen und von den Zinken abheben soll, an seiner Spitze immer einen möglichst engen Abstand vom Trommelmantel hat und sich somit kein Material zwischen die Zinkenspitze des Abstreifers und den Trommelmantel setzen kann.

Um die Aufnahme des Ernteguts durch die Förderzinken zu verbessern, ist es günstig, wenn die Einzelzinken, die eine Spitze, einen Sockel und eine Zinkenmittelachse umfassen, so ausgerichtet sind, dass die Zinkenmittelachse gegenüber einer Vertikalen (V) einen Winkel (α) bildet, so dass die Spitzen im montierten Zustand bei rotierender Trommel dem Sockel nachlaufen. Dabei wird der Winkel (α) so ausgewählt, dass einerseits eine vollständige Mitnahme des aufzunehmenden Ernteguts gewährleistet ist und andererseits die Zinken verschleißarm und bodenschonend arbeiten. Der Nachlauf-Effekt kann einerseits durch die Ausbildung des Winkels (α) im Zinken selbst bewirkt werden. Er kann aber auch bewirkt werden, indem ein an sich gerade ausgerichteter Förderzinken auf eine schräge Oberfläche der Pick-up-Trommel, bzw. der darin integrierten Aufnahmetasche, angebracht wird.

Die vorstehend beschriebene Gestaltung des Förderzinkens mit der leicht nacheilenden Spitze begünstigt darüber hinaus auch das Ablösen des Materials von den Zinken im Bereich der Abstreifer.

In einer bevorzugten Ausführungsform sind die Einzelzinken konisch zulaufend ausgeformt, wobei im Bereich des Zinkenfußes eine größere Kraft notwendig ist, um den Einzelzinken zu biegen als im Bereich der Zinkenspitze. Der Einzelzinken ist somit an seinem äußeren (dem Ladegut zugewandten) Ende elastischer als an seinem Sockelende.

Damit die Zinken an ihrem Zinkenfuß eine hohe Festigkeit aufweisen und in ihrem Spitzenbereich flexibel sind, ist vorzugsweise vorgesehen, dass sie sich vom Sockel bis zur Spitze hin verjüngen. Diese Ausführungsform entfaltet Vorteile in zweifacher Hinsicht:
a) Durch die sich verjüngende Form der Zinken ist der Förderzinken, insbesondere im Bereich der Spitze, wesentlich flexibler als es herkömmlich Förderzinken aus Stahldraht sein können. Die bekannten Doppel-Förderzinken aus Federdraht sind aus einem Draht mit konstantem Durchmesser gewickelt. Ein Doppel-Förderzinken aus Federdraht weist somit zwar auch zwei aus dem Sockelbereich hervortretende Einzelzinken auf, bei diesen handelt es sich jedoch um die gerade gestellten Enden des Federdrahtes, aus dem auch die Wicklung besteht. Dieses Konstruktionsprinzip schließt eine konische Gestaltung des geraden Zinkenendes aus.
   Während bei den Doppel-Förderzinken aus Stahldraht bei Auftreffen der Zinkenspitze auf einen Fremdkörper die Energie in der Federspirale gespeichert wird und die vordere Spitze des Stahldrahtes sich sehr wenig biegen lässt um beispielsweise einem Fremdkörper auszuweichen zu können, weicht der erfindungsgemäße Zinken bei Auftreffen auf einen Fremdkörper wesentlich leichter aus. Die Energie wird im Einzelzinken selbst gespeichert. Die Folge ist, dass beim Auftreffen auf einen Fremdkörper der aus einem elastischen Kunststoff mit einer sich verjüngenden Form gebildete Zinken dem Fremdkörper ausweicht oder von diesem "aus seiner Bahn" bewegt wird. Ein Doppel-Förderzinken aus Stahldraht mit Windungsspirale oder auch ein aus Stahldraht hergestellter Zinken mit elastischem Zinkenfuß dagegen speichert die eingebrachte Energie im Wesentlichen in der Windungsspirale oder im elastischen Zinkenfuß und gibt diese ruckartig bei Überschreiten einer Kraftschwelle frei.
b) Darüber hinaus erweist sich die vorgeschlagene Konstruktion im Bereich der Materialübergabe auf die Abstreifer als vorteilhaft: Bei den bekannten, feststehenden Zinken, die montagemäßig erhebliche Vorteile gegenüber bahngeführten Zinken haben, ist auf Grund der weitgehende Starrheit der Einzelzinken der Winkel zwischen Einzelzinken und Sockel konstant bzw. behält der Zinken während der Rotation der Trommel seinen voreingestellten Wert bei.

Beim erfindungsgemäßen Förderzinken, der sich vorteilhafterweise zudem noch zur Spitze hin verjüngt, vergrößert sich jedoch der Winkel zwischen Einzelzinken und Abstreifer beim Hindurchtreten der Einzelzinken durch die Abstreifer zunehmend, da der Zinken insbesondere zu seiner Spitze hin durch die Last des Ernteguts zurückgedrückt wird. Der Zinken, der sich bei fortschreitender Trommeldrehung mehr und mehr aus dem geernteten Material zurückzieht wird an seiner Zinkenspitze immer biegsamer und stellt so sicher, dass möglichst wenig Material zwischen die Abstreifer gezogen wird.

Um den Verschleiß im Spitzenbereich zu reduzieren, kann die Zinkenspitze durch eine Verschleißbuchse abgedeckt sein. Die Verschleißbuchse kann auf die Spitze aufgeklebt oder aufgeschweißt sein. Alternativ hierzu ist es auch möglich, dass bei einem im Gussverfahren hergestellten Kunststoffzinken die Buchse zunächst in eine geeignete Gussform eingesetzt und im Zuge des Ausgießen oder Ausspritzen der Gussform in den Zinken integriert wird. Da die Verschleißbuchse nur die Zinkenspitze selbst abdeckt, wird die Flexibilität des Einzelzinkens nur unerheblich beeinträchtigt.

Um die Festigkeit des Förderzinkens zu verbessern, kann der den Zinken bildende Kunststoff mittels Glasfasern oder anderer Zusätze verstärkt sein. Insbesondere ist es günstig, wenn schon der Rezeptur des Kunststoffgusses die entsprechenden Elemente beigefügt sind.

Um das Erntegut sauber vom Boden aufzuheben, Reparatur- und Wartungskosten gering zu halten und bodenschonend zu arbeiten sind die Einzelzinken formstabil, elastisch und rückstellfähig ausgeführt.

In einer besonderen Ausführungsform umfasst der Förderzinken Einzelzinken, welche, anschließend an den Sockel, wenigstens an einer Seite eine stegartig ausgebildete Anlagefläche umfassen. Zwischen den Innenseiten der beiden Einzelzinken eines Förderzinkens und/oder zwischen den Außenseiten von Einzelzinken zweier benachbarter Förderzinken werden hierdurch Führungsbahnen für an diesen Stellen eingreifende Abstreifer gebildet Vorzugsweise sind die so ausgebildeten Führungsbahnen U-förmig ausgebildet. Es kommen jedoch auch andere Führungsprofile in Betracht, beispielsweise eine abgewandelte U-Form mit gegenüber der Bodenebene schräg ausgerichteten Seitenbegrenzungen.

In einer bevorzugten Ausführungsform weisen die Förderzinken Einzelzinken auf, die bezogen auf ihre Zinkenmittelachse in Förderrichtung ein Widerstandsmoment aufweisen, das unterschiedlich ist zu dem Widerstandsmoment quer zur Förderrichtung. Hierdurch wird es möglich, die Zinken so zu konzipieren, dass ein seitliches Ausweichen bei Kontakt des Einzelzinkens mit einem Fremdkörper begünstigt wird. Die Förderwirkung des Zinkens gegenüber dem Erntegut wird hierdurch nicht oder nur unwesentlich beeinträchtigt.

Besonders vorteilhaft ist es, wenn das Widerstandsmoment des Einzelzinkens in Förderrichtung größer ist als quer zur Förderrichtung.

Die Einzelzinken sind mit dem Sockel vorzugsweise einteilig verbunden. Eine solche einteilige Verbindung kann beispielsweise bewirkt werden, indem schon die Herstellung, beispielsweise mittels Spritzgussverfahren, in einer einteiligen Form erfolgt. Die einteilige Verbindung kann aber auch bewirkt werden, indem Sockel und Einzelzinken zunächst einzeln hergestellt und danach unlösbar miteinander verbunden, beispielsweise verklebt, werden.

In einer alternativen Ausführungsform sind Sockel Einzelzinken nicht einteilig, sondern lösbar miteinander verbunden. Die lösbare Verbindung kann beispielsweise durch eine formschlüssige Verbindung oder durch eine Gewinde- oder Rast-Verbindung hergestellt sein. Bei Beschädigung oder Verschleiß eines Einzelzinkens ist dieser Einzelzinken somit demontierbar und kann ausgetauscht werden.

Die Erfindung wird nachstehend beschrieben und in den Zeichnungen dargestellt.
- Fig. 1: zeigt eine erste Ausführungsform eines Förderzinkens 8 in Vorderansicht;
- Fig. 2: zeigt die Seitenansicht zu Fig. 1;
- Fig. 3: zeigt eine Zinkentasche in Draufsicht;
- Fig. 4: zeigt die Seitenansicht zu Fig. 3;
- Fig. 5: zeigt den Querschnitt im Befestigungsbereich. Auf einer Seite mit Befestigungsschraube und auf der anderen Seite ohne dieselbe;
- Fig. 6: zeigt die Förderzinken 8 in Verbindung mit einer Aufnahmevorrichtung 1;
- Fig. 7a: zeigt eine zweite Ausführungsform einen Förderzinkens 8';
- Fig. 7b: zeigt eine dritte Ausführungsform eines Förderzinkens 8";
- Fig. 8a: zeigt eine vierte Ausführungsform eines Förderzinkens 8"' in Seitenansicht;
- Fig. 8b: zeigt den Förderzinken 8"' aus Fig. 8a in Vorderansicht (Schnittdarstellung);
- Fig. 9a: zeigt eine fünfte Ausführungsform eines Förderzinkens 8"" in Seitenansicht;
- Fig. 9b: zeigt den Förderzinken 8"" aus Fig. 9a in Vorderansicht (Schnittdarstellung);
- Fig. 9c: zeigt den Förderzinken 8"" aus Fig. 9a in Draufsicht.

Gleiche oder ähnliche Elemente können in den nachfolgenden Figuren mit gleichen oder ähnlichen Bezugszeichen versehen sein. Ferner enthalten die Figuren der Zeichnung, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht näher beschriebenen Kombinationen zusammengeführt werden können.

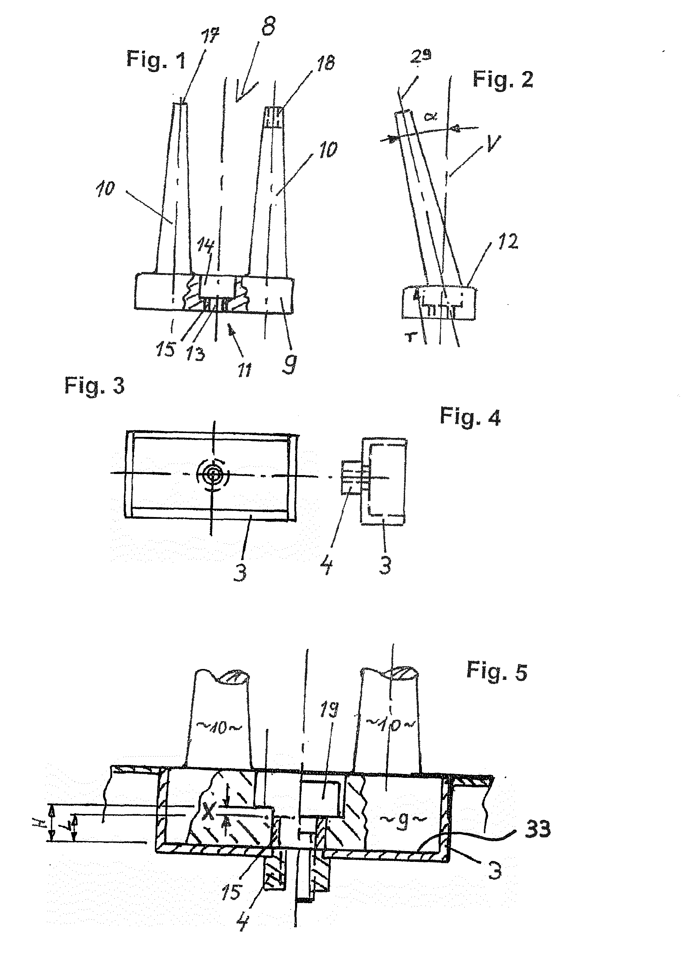

Bei dem in den Figuren 1 und 2 dargestellten Förderzinken 8 sowie bei den in den weiteren Ausführungsbeispielen gezeigten Förderzinken 8', 8", 8"' und 8"" handelt es sich um Doppel-Förderzinken, die jeweils einen Sockel 9 und zwei Einzelzinken 10 umfassen. Es ist jedoch nicht ausgeschlossen, dass ein Förderzinken nicht nur zwei, sondern drei oder mehr Einzelzinken umfasst.

Die Wölbung der Oberfläche des Sockels 9 weist einen Radius r auf. Mittig im Sockel 9 befindet sich ein Befestigungsbereich 11, in welchem sich eine Befestigungsbohrung 13 mit einer Absenkung 14 befindet. In die Befestigungsbohrung 13 ist eine Buchse 15 eingesetzt.

Der Förderzinken ist aus Kunststoff, vornehmlich Polyurethan hergestellt, welcher durch Legierungszusätze formstabil, elastisch und rückstellfähig ausgeführt ist. Durch Zusätze von Glasfasern können zusätzlich die Eigenschaften optimiert werden. Die Einzelzinken 10 weisen Spitzen 17 auf, die zur Erhöhung der Standzeit mit Verschleißbuchsen 18 versehen sein können.

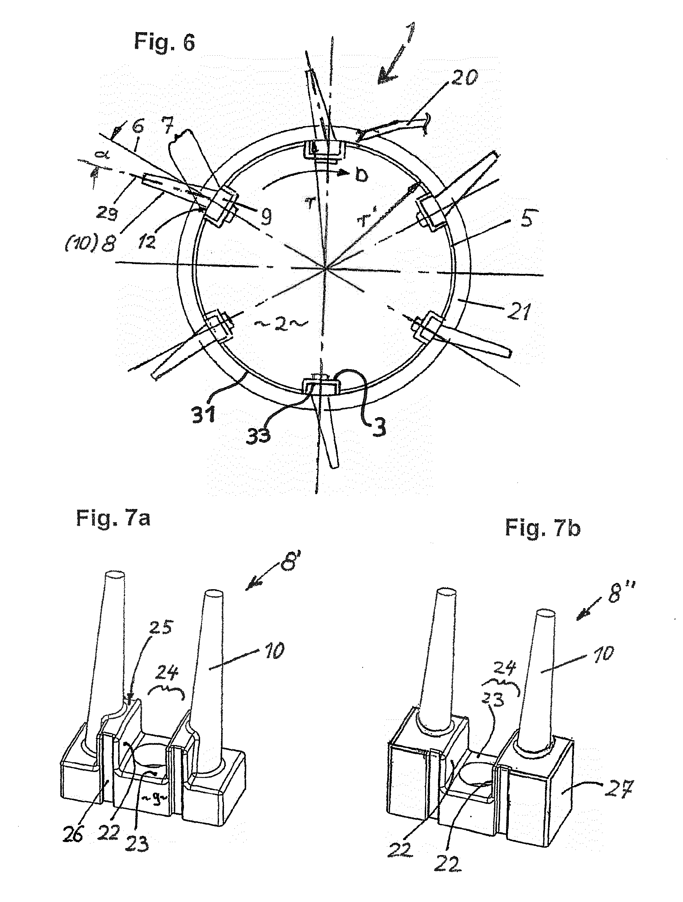

Fig. 6 zeigt schematisch eine Aufnahmevorrichtung (Pick-up) 2 einer nicht näher dargestellten Erntemaschine, umfassend eine Trommel 2 mit aufmontierten Förderzinken 8 sowie einem schematisch angedeuteten Abstreifer 20 zur Weiterleitung des aufgenommenen Ernteguts an eine nachgeordnete Förder-, Press- und/oder Schneideinrichtung. Die gewölbte Oberfläche 12 des Sockels 9 bildet einen Kreisbogenabschnitt 7 mit einem Radius r, der so gewählt ist, dass er einem Radius r' entspricht, den die jeweilige Trommel 2 aufweist, auf die der Förderzinken 8 montiert ist. Die Trommel 2 weist einen Trommelmantel 5 mit einer Oberfläche 31 auf, in den die Förderzinken 8 zumindest teilweise mittels dafür vorgesehener Zinkentaschen 3 (vergl. Fig. 3 und 4) integriert sind. Der Sockel des Förderzinkens 8 ist formschlüssig in die Zinkentasche 3 eingesetzt und füllt diese vorzugsweise vollständig aus (vergl. Fig. 5). Die Zinkentasche 3 weist einen Boden 33 auf. Soweit die Höhe der Sockel 9 nicht ausreicht, um die Taschen bis zur Oberfläche 31 des Trommelmantels 5 auszufüllen, können nicht näher dargestellte Ausgleichselemente, vorzugsweise Ausgleichsringe, vorgesehen sein die zwischen den Boden 33 der Taschen 3 und den Sockel 9 der Aufnahmevorrichtung 2 montiert sind.

Die Förderzinken 8 sind zwar besonders gut für Aufnahmevorrichtungen mit Aufnahmetaschen 3 geeignet, können aber auch anderweitig eingesetzt werden. So ist es beispielsweise auch möglich, dass die Förderzinken 8 nicht in den Trommelmantel 5 integriert, sondern auf diesen aufmontiert sind. In diesem Fall ist der Sockel vorzugsweise in Trommelrotationsrichtung D mit einer strömungstechnisch günstigen, kantenarmen Form ausgeführt.

Die in den Sockel 9 eingesetzte Buchse 15 besteht aus Metall und ist derart in den Sockel 9 eingesetzt, dass im nicht verschraubten Zustand die Länge L der Buchse 15 geringer ist als der Abstand H vom Boden des Förderzinkens 8 bis zur Auflagefläche für den Kopf einer Befestigungsschraube 19, wodurch sich eine Maßdifferenz X ergibt.

Im dargestellten Ausführungsbeispiel ist die Befestigungsschraube 19 mit einer Schweißmutter 4, die sich unter dem Boden 33 der Zinkentasche 3 befindet, befestigt. Es sind aber auch andere Befestigungsarten möglich. Der Kopf der Befestigungsschraube 19 wird von der Absenkung 14 aufgenommen und drückt sich bei der Verschraubung eines Förderzinkens 8 soweit in den Sockel 9 ein, bis er nach Aufhebung der Maßdifferenz X auf der Buchse 15 zur Auflage kommt und bis zum notwendigen Drehmoment angespannt wird.

Die Einzelzinken 10 können aus dem Sockel 9 vertikal oder, wie im dargestellten Ausführungsbeispiel, unter Ausbildung einen Winkel α, hervortreten. Der Winkel α wird gebildet zwischen einer Radialen 6, die vertikal zur Drehachse der Trommel 2 ausgerichtet ist sowie der Zinkenmittelachse 29 eines Einzelzinkens 10. Zur besseren Erntegutaufnahme und zur besseren Ablösung des Ernteguts durch die Abstreifer 20 ist es vorteilhaft, die Förderzinken 8 mit schräg austretenden Einzelzinken 10 so in die Zinkentaschen 3 der Trommel 2 zu montieren, dass die Einzelzinken 10 gegen die Drehrichtung D nach hinten, also nachlaufend, ausgerichtet sind.

Die Einzelzinken 10 verlaufen von unten nach oben konisch. Diese Ausführung hat den Vorteil, dass die unter Belastung auftretende Biegespannung im Zinkenschaft angenähert gleichmäßig auftreten. Am Kopf der Einzelzinken 10 kann eine Verschleißbuchse 18 angebracht, beispielsweise aufgeklebt, sein.

Die Fig. 7a und 7b zeigen besondere Ausführungsformen des erfindungsgemäßen Förderzinkens 8.

Fig. 7a zeigt einen Förderzinken 8' mit einer zwischen den Einzelzinken 10 ausgebildeten, U-förmigen Führungsbahn 24. Die Führungsbahn 24 wird gebildet durch zwei stegartige Erhöhungen 25 an der Oberseite des Sockels 9 und weist einander zugerichtete Anlageflächen 22 auf. Die Anlageflächen 22 bilden gemeinsam mit der Auflage 23 die Führungsbahn 24. Die Förderzinken 8' werden vorzugsweise an Trommeln 2 mit integrierten Zinkentaschen 3 eingesetzt, so dass die Auflage 23 übergangslos an den Trommelmantel 5 anschließt. Die Erhöhung 25 überragt in diesem Fall die Oberfläche des Trommelmantels 5, während der Sockel 9 in die Zinkentasche 3 und damit in den Trommelmantel 5 integriert ist. Im Arbeitseinsatz bei rotierender Trommel 2 wird der Abstreifer 20 exakt durch die zwischen den Einzelzinken 10 ausgebildete Führungsbahn 24 geführt und kann das aufgenommene Erntegut widerstandsarm untergreifen.

Fig. 7b zeigt einen Förderzinken 8", bei dem an den Außenseiten der Einzelzinken 10 zusätzliche Anlageflächen 27 vorgesehen sind. Die Anlageflächen 27 zweier auf der Trommel 2 benachbarter Förderzinken 8" können ebenfalls U-förmige Führungsbahnen ausbilden.

Die Führungsbahn 24 kann sich anschließen an eine auf der Trommel 2 mittels Kreisringsegmenten 21 hergestellte, ebenfalls U-förmige, Führungsbahn. Hierdurch wird gewährleistet, dass die Abstreifer 20 nicht nur zwischen den Einzelzinken 10 sondern über den ganzen Trommelumfang geführt werden. Zur exakten Ausrichtung von Trommelführungsbahn und Zinkenführungsbahn können in den DoppelFörderzinken 8' und 8" Aufnahmenuten 26 vorgesehen sein, in die die Enden der Kreisbogensegmente 21 eingreifen.

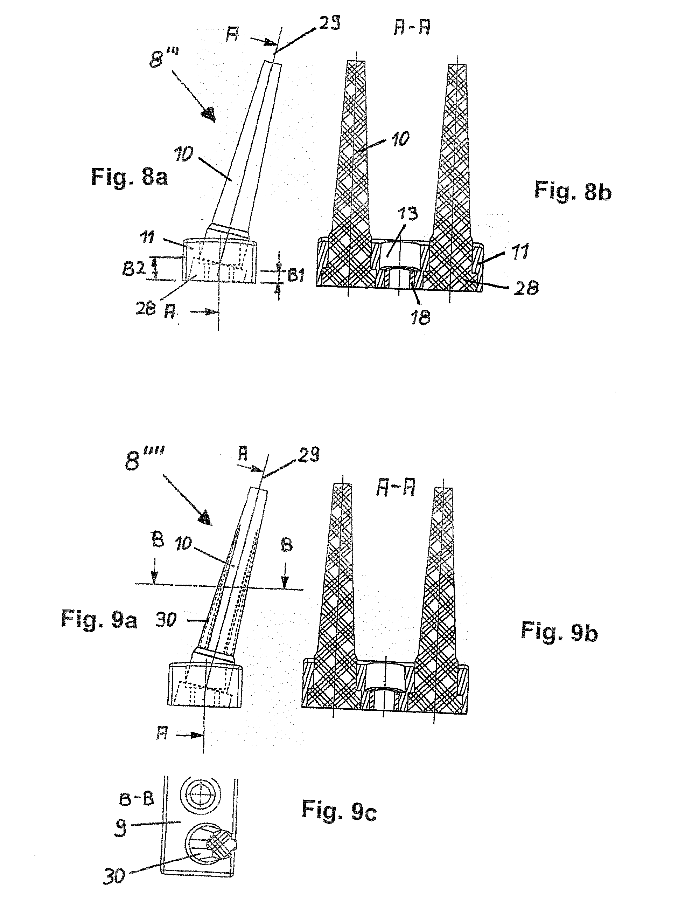

Die Fig. 8a und 8b zeigen einen alternativen Förderzinken 8"', bei dem die Einzelzinken 10 und die Sockel 9 zunächst als Einzelteile angefertigt und dann zu der dargestellten Baugruppe zusammengefügt sind. Die Einzelzinken 10 bestehen dabei aus einem elastischen Kunststoffmaterial, der Sockel selbst kann aus dem gleichen oder einem anderen Kunststoffmaterial bestehen, er kann aber auch einem anderem Material, beispielsweise aus einem Stahl oder Aluminiummaterial gefertigt sein. Die Einzelzinken 10 weisen in ihrem Fußbereich einen verdickten Ansatz 28 auf, dessen Form an eine entsprechende Aufnahmebohrung im Sockel 11 angepasst ist. Zinken 10 und Sockel 9 sind im Ausführungsbeispiel somit formschlüssig miteinander verbunden. Nach Montage des Förderzinkens 8"' auf eine Trommel mittels einer durch die Befestigungsbohrung 13 geführte Befestigungsschraube liegen Zinkenfuß und Sockelboden bündig auf der Oberfläche des Trommelmantels auf. Die Einzelzinken 10 sind im Ausführungsbeispiel bezogen auf ihre Zinkenmittelachse 29, konisch und in jeder Ebene kreisrund.

Wie Fig. 8a zeigt, resultiert aus der Schrägstellung des runden Einzelzinkens 10 gegenüber dem Sockel 9 an der Kontaktfläche von Zinkenfuß und Trommelmantel eine unterschiedliche Höhe des Ansatzes 28. Der Ansatz 28 weist an der einen Seite eine Höhe B1 und an der anderen Seite eine Höhe B2 aus. Da die Aufnahmebohrung im Sockel 9 analog ausgeformt ist und den Einzelzinken 10 im Fußbereich formschlüssig umhüllt, wird die Stellung und Ausrichtung des Einzelzinkens 10 in einer vordefinierten Position fixiert. Gleichzeitig wird so eine Verdrehsicherung für den Einzelzinken 10 geschaffen.

Selbstverständlich ist es auch möglich, die Einzelteile des Doppelförderzinkens 8"' auf andere Weise als durch die formschlüssige Steckverbindung miteinander zu verbinden, beispielsweise mittels einer Schraub- oder Klebverbindung.

Die Fig. 9a bis 9c zeigen einen Förderzinken 8"" mit gegenüber der in den Figuren 8a und 8b dargestellten Ausführungsform abgewandelten Einzelzinken 10. Die Einzelzinken 10 in den Fig. 9a bis 9c sind profiliert. Mittels der Profilierung oder auch mittels einer elliptisch-konischen Gestaltung ist es möglich, das Widerstandsmoment des Einzelzinkens bezogen auf seine Querachsen unterschiedlich auszuführen: Während bei einem kreisrunden, unprofilierten Einzelzinken 10 das Widerstandsmoments ausgehend von der Zinkenmittelachse 29 in alle senkrecht hierzu ausgerichteten Richtungen gleich groß ist, kann durch eine oder mehrere Profilnuten 30 oder durch eine elliptische Form eine bevorzugte Ausweichrichtung für den Einzelzinken 10 vordefiniert werden.

Besonders günstig ist es vor diesem Hintergrund, wenn der Einzelzinken 10 in Förderrichtung ein hohes Widerstandsmoment aufweist und in Seitenrichtung ein kleineres. Da das zu fördernde Erntegut im Wesentlichen gleichmäßig und frontal auf die Einzelzinken 10 auftrifft und von diesen aufgenommen wird, behalten die Einzelzinken 10 ihre Ausrichtung bei. Trifft der Einzelzinken 10 jedoch auf ein Hindernis, beispielsweise einen Stein, und wird von diesem Stein eine Seitenkraft auf den Einzelzinken 10 bewirkt, so resultiert hieraus ein seitliches Ausweichen des Einzelzinkens 10. Das seitliche Ausweichen reduziert durch Fremdkörper bedingte Zinkenausfälle bzw. Zinkenbrüche. Weiterhin werden im Boden befindliche Steine durch die seitlich ausweichenden Einzelzinken 10 nicht so leicht herausgerissen und durch die sich nach dem Herausreißen entspannende Feder in die Umgebung oder den aufzunehmenden Futterschwad katapultiert.

Selbstverständlich ist es auch möglich, die Einzelzinken 10 der Förderzinken 8, 8' und 8" mit Profilnuten zu versehen um die beschriebenen Vorteile zu erzielen.

**Bezugszeichenliste:**

| | | | |
|---|---|---|---|
| 1 | Aufnahmevorrichtung (Pick-up) | 23 | Auflage |
| 2 | Trommel | 24 | Führungsbahn |
| 3 | Zinkentasche | 25 | Erhöhung |
| 4 | Schweißmutter | 26 | Aufnahmenut |
| 5 | Trommelmantel | 27 | Anlagefläche |
| 6 | Radiale | 28 | Ansatz |
| 7 | Kreisbogenabschnitt | 29 | Zinkenmittelachse |
| 8 | Förderzinken (1. Ausführungsform) | 30 | Profilnut |
| 8' | Förderzinken (2. Ausführungsform) | 31 | Oberfläche |
| 8" | Förderzinken (3. Ausführungsform) | 32 | |
| 8"' | Förderzinken (4. Ausführungsform) | 33 | Boden |
| 8"" | Förderzinken (5. Ausführungsform) | | |
| 9 | Sockel | | |
| 10 | Einzelzinken | B1, B2 | Höhe |
| 11 | Befestigungsbereich | V | Vertikale |
| 12 | Oberfläche (gewölbt) | L | Länge |
| 13 | Befestigungsbohrung | H | Abstand |
| 14 | Absenkung | D | Drehrichtung |
| 15 | Buchse | X | Maßdifferenz |
| 16 | - | α | Winkel |
| 17 | Spitze | r | Radius |
| 18 | Verschleißbuchse | r' | Radius |
| 19 | Befestigungsschraube | A-A | Schnitt |
| 20 | Abstreifer | B-B | Schnitt |
| 21 | Kreisringsegment | | |
| 22 | Anlagefläche | | |

## Patentansprüche

1. Aufnahmevorrichtung (1) an einer Landmaschinen, wie Erntemaschine für Halm- und Blattgut oder Heuwerbemaschine, umfassend eine Trommel (2) mit darauf angebrachten Förderzinken (8, 8', 8", 8"', 8"") aus einem elastischen Material, bei dem es sich vorzugsweise um einen Kunststoff oder Gummi handelt, **dadurch gekennzeichnet, dass**
- der Förderzinken (8, 8', 8", 8"', 8"") einen Sockel (9) und wenigstens zwei aus dem Sockel (9) hervortretenden Einzelzinken (10) umfassen,
- der Sockel (9) einen Befestigungsbereich (11) umfasst, welcher zwischen den Einzelzinken (10) angeordnet ist,
- die Trommel (2) Taschen (3) zur Aufnahme der Förderzinken (8, 8', 8", 8"', 8"") aufweist,
- die Sockel (9) der Förderzinken (8, 8', 8", 8"', 8"") eine Oberfläche (12) aufweisen und
- die Oberfläche der Trommel (2) gemeinsam mit den Oberflächen (12) der Sockel (9) eine das Erntegut widerstandsarm leitende Kontur ausbildet.

2. Aufnahmevorrichtung nach Anspruch (1), **dadurch gekennzeichnet, dass** die Sockel (9) formschlüssig in den Taschen (3) der Trommel (2) einbaubar sind.

3. Aufnahmevorrichtung nach Anspruch 1 oder 2, **dadurch gekennzeichnet, dass** die Oberfläche (12) der Sockel (9) an die Oberfläche (31) der Trommel (2) angeglichen ist, so dass nur die Einzelzinken (10) die Oberfläche der Trommel (2) überragen.

4. Aufnahmevorrichtung nach einem der Ansprüche 1 bis 3, **dadurch gekennzeichnet, dass** die Oberfläche (12) der Sockel (9) einen Radius aufweist, der an den Außenradius der Trommel (2) angeglichen ist.

5. Aufnahmevorrichtung nach einem der Ansprüche 1 bis 4, **dadurch gekennzeichnet, dass** Ausgleichsringe vorgesehen sind, welche zwischen den Boden (33) der Taschen (3) und den Förderzinken (8, 8', 8", 8"', 8"") montierbar sind.

6. Förderzinken (8, 8', 8", 8"', 8"") für eine Aufnahmevorrichtung (1) an einer Landmaschine, wie Erntemaschine für Halm- und Blattgut oder Heuwerbemaschine, umfassend
- einen Sockel (9) und wenigstens zwei aus dem Sockel (9) hervortretende Einzelzinken (10), wobei wenigstens die Einzelzinken (10) aus einem elastischen Material, bei dem es sich vorzugsweise um einen Kunststoff oder Gummi handelt, bestehen und
- einen im Sockel (9) angeordneten Befestigungsbereich (11), welcher zwischen den Einzelzinken (10) angeordnet ist,
**dadurch gekennzeichnet, dass** der Befestigungsbereich (11) zwischen den Einzelzinken (10) im Sockel (9) eine Befestigungsbohrung (13) mit einer Absenkung (14) zur Aufnahme eines Schraubenkopfes umfasst.

7. Förderzinken (8, 8', 8", 8"', 8"") nach Anspruch 6, **dadurch gekennzeichnet, dass** in die Befestigungsbohrung (13) eine starre Buchse (15) eingesetzt ist.

8. Förderzinken (8, 8', 8", 8"', 8"") nach einem der Ansprüche 6 oder 7, **dadurch gekennzeichnet, dass** die Absenkung (14) eine Auflage (16) ausbildet, welche im nicht montierten Zustand, gegenüber die starren Buchse (15), diese um ein Maß (x) überragt.

9. Förderzinken (8, 8', 8", 8"', 8"") nach einem der Ansprüche 6 bis 8, **dadurch gekennzeichnet, dass** die Einzelzinken (10) eine Spitze (17), einen Sockel (9) und eine Zinkenmittelachse (29) umfassen und dass die Zinkenmittelachse (29) gegenüber einer Vertikalen (V) einen Winkel (α) bildet, so dass die Spitzen (17) im montierten Zustand bei rotierender Trommel (2) dem Sockel (9) nachlaufen.

10. Förderzinken (8, 8', 8", 8"', 8"") nach einem der Ansprüche 6 bis 9, **dadurch gekennzeichnet, dass** der Kunststoff zur Herstellung der Förderzinken (8, 8', 8", 8"', 8"") mittels Glasfasern verstärkt ist.

11. Förderzinken (8, 8', 8", 8"', 8"") nach einem der Ansprüche 6 bis 10, **dadurch gekennzeichnet, dass** die Einzelzinken (10) anschließend an den Sockel (9) wenigstens an einer Seite eine stegartig ausgebildete Erhöhung (25) mit einer Anlagefläche (22) umfassen.

12. Förderzinken (8, 8', 8", 8"', 8"") nach Anspruch 11, **dadurch gekennzeichnet, dass** die zwischen den Einzelzinken (10) angeordneten Anlageflächen (22) in Verbindung mit der Auflage (23) eine U-förmige Führungsbahn (24) ausbilden.

13. Förderzinken (8, 8', 8", 8"', 8"") nach einem der vorhergehenden Ansprüche, **dadurch gekennzeichnet, dass** die Einzelzinken (10) und der Sockel (9) einteilig hergestellt sind.

14. Förderzinken (8, 8', 8", 8"', 8"") nach einem der vorhergehenden Ansprüche, **dadurch gekennzeichnet, dass** die Einzelzinken (10) und der Sockel (9) aus mehreren Teilen hergestellt sind.

15. Förderzinken (8, 8', 8", 8"', 8"") nach Anspruch einem der vorhergehenden Ansprüche, **dadurch gekennzeichnet, dass** die Einzelzinken (10) demontierbar sind, so dass defekte Einzelzinken (10) austauschbar sind.
